(19) **Europäisches Patentamt / European Patent Office / Office européen des brevets**

(11) **EP 1 998 270 A1**

(12) **EUROPEAN PATENT APPLICATION**

(43) Date of publication:
03.12.2008 Bulletin 2008/49

(51) Int Cl.:
*G06F 21/24* (2006.01)   *G06F 21/02* (2006.01)
*G06F 21/00* (2006.01)

(21) Application number: 07109378.5

(22) Date of filing: 31.05.2007

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **NTT DoCoMo, Inc.**
**Tokyo (JP)**

(72) Inventors:
• **Lachmund, Sven**
  **80687, Munich (DE)**

• **Zugenmaier, Alf**
  **81241, Munich (DE)**

(74) Representative: **Betten & Resch**
**Patentanwälte**
**Theatinerstrasse 8**
**(Fünf Höfe)**
**80333 München (DE)**

Remarks:
Amended claims in accordance with Rule 137(2) EPC.

(54) **External storage device**

(57)   An external storage device which is capable to be connected to a host to enable said host to write data thereon or to read data therefrom, said storage device comprising:
a memory module onto which data can be written and from which data can be read; and
an intercepting module, said intercepting module being adapted to receive a read or a write command from said host, said intercepting module being further adapted to perform encryption or decryption on the data to be read from said memory or to be written to said memory based on one or more keys stored on said external storage device, and further being adapted to perform reading data from or writing data to said memory by a file system driver implemented in said external storage device.

Fig. 2

**Description**

**FIELD OF INVENTION**

The present invention relates to an external storage device.

**BACKGROUND OF THE INVENTION**

External mass storage devices, such as USB-Sticks are small with respect to their physical dimensions and they have a large capacity of several gigabytes today. Thus, they are a threat for corporate networks, as it is easy to copy arbitrary data on them and to leave the company building with them without being detected. Since they can get lost as easily, it is a vital interest of companies not to loose sensitive corporate data by that way. On the other hand, these sticks are quite useful and ease the daily office work when files are to be shared among colleagues. Forbidding the use of external storage media is one way to address the issue but it is not adequate as well. It is more convincing to keep the flexibility of using these sticks by securing the content on them at the same time.

There are different solutions on the market that deal with encryption of the content of the external storage media Some require proprietary software, which is to be installed on the machine which wants to access the media. Others use additional hardware tokens containing cryptographic keys to perform encryption and decryption, which can be removed and ought to be carried around separately from the storage media. The risk is that these tokens easily can get lost or that users do not keep them separate.

A solution to this problem is described in the European Patent application no 06101719.0 titled "External Storage Medium" and filed by the same applicant as the present application. This application is incorporated herein by reference. Therein there is described an external storage medium which automatically encrypts the data stored thereon while keeping them readable for arbitrary hosts until a certain expiration condition is met. Thereafter the access credentials (which are for example the keys necessary for reading the data) expire so that the files are not readable anymore.

Such a device consists of an encryption and decryption scheme that is transparent to the user - no additional hardware shall be required and no additional software shall be required to access the storage media.

A problem in implementing such a novel external storage medium lies in the provision of a concrete implementation which requires as few modifications to existing systems as possible and which therefore provides a high downward compatibility.

Preferably such a solution should be able to make use of existing drivers for mass storage media that come with today's main stream operating systems.

**SUMMARY OF THE INVENTION**

According to one embodiment there is provided an external storage device which is capable to be connected to a host to enable said host to write data thereon or to read data therefrom, said storage device comprising:

a memory module onto which data can be written and from which data can be read; and

an intercepting module, said intercepting module being adapted to receive a read or a write command from said host, said intercepting module being further adapted to perform encryption or decryption on the data to be read from said memory or to be written to said memory based on one or more credentials stored on said external storage device, and further being adapted to perform reading data from or writing data to said memory by forwarding a read or write command to said memory module of said external storage device to thereby read or write data which has been encrypted or decrypted using said one or more keys stored on said storage device .

With such a device files can be stored encrypted with different credentials on external mass storage media in a way that is transparent to the host that accesses the media. It is not required to prepare hosts on which the storage media is used. Moreover, hardware encryption and decryption can be implemented efficiently and the host's CPU will not be used for encryption and decryption.

According to one embodiment the external storage device further comprises:

a credential mapping table for respectively mapping one or more credentials to corresponding segments of said memory module to thereby define the one or more credentials by which the data in a certain segment is encrypted or decrypted, whereas the segment corresponding to an active credential appears towards said host as said external storage medium and the other segments being invisible.

In this manner the storage can be segmented into segments which then appear to a host as separate devices. The mapping of the credential mapping may be done by the host and then remains fixed, possibly the segments are changed by the host again. In this manner on a very low level (the actual "storage level") an automatic encryption and decryption can be performed without the need of even a file system or a file system driver having to be implemented on the external storage

According to one embodiment external storage further comprises:

> a virtual file system module for providing a virtual file system towards said host, said file system module being provided for receiving read or write commands from said host;
> a mapping module for mapping a logical address received in connection with a read or write command by said virtual file system to a corresponding physical block address;
> a credential store for storing at least one access credential used for encrypting and/or decrypting data to be stored onto or written from said external storage device, and
> a module for generating a read or write command to an address in said memory based on the mapping performed by said mapping module.

According to one embodiment external storage further comprises:

> a module for receiving read or write commands from said host;
> a mapping module for mapping a logical address received by said virtual file system to a corresponding physical block address;
> a credential store for storing at least one access credential used for encrypting and/or decrypting data to be stored onto or written from said external storage device; and
> a mass storage system driver for forwarding a read or write command to an address in said memory module identified by said mapping moodule.

This enables a particularly simple implementation of such an encryption storage device. The receiving module acts towards the host as a kind of a "virtual mass storage system", the mapping module performs the translation, the credential store holds the credential and the mass storage system driver outputs the read/write command towards the address given by the mapping module.

According to one embodiment external storage further comprises:

> a virtual file system which appears towards said host as a file system implemented on said external storage medium and which presents to said host those data as readable and/or writable for which there are access credentials which have not yet expired.

In this manner the access to the storage medium by the host can be made on a file or directory level.

According to one embodiment for reading and writing there is one credential being active among one or more credentials; and
said mapping module stores a mapping between a logical address and a corresponding physical address depending on the access credential.

The multiple possible credentials of which only one is active enables different expiry conditions to be used for different credentials. Nevertheless, through only one of the credentials being active, the host "sees" only the part of the storage device encrypted by this active credential. The host may also see empty blocks in addition.

According to one embodiment for reading and writing there is one or more credential being active among one or more credentials;
said mapping module stores a mapping between a logical address and a corresponding physical address and access credential depending on the selected segment.

According to one embodiment said external medium has several partitions, whereas for each partition an active credential is assigned and the user chooses the credential by which he wants to encrypt or decrypt files on the external media by operating on the corresponding partition.

This enables "multiple" storage devices to be implemented on a single storage device, the individual ones being distinguishable by their corresponding partitions. According to one embodiment different expiration conditions can be assigned to different access credentials.

This enhances the flexibility of he device for the user.

According to one embodiment a data block is encrypted by a block key, and said block key is encrypted by a corresponding credential.

According to one embodiment the external storage device further comprises:

a key allocation table for maintaining a correspondence between a block and its corresponding block key with which the block is encrypted;

a credential allocation table for maintaining a correspondence between a block and its corresponding credential with which the corresponding block key is encrypted.

This enables the usage of different keys and credentials for the external storage medium, while nevertheless the whole storage medium is accessible to the host as long as the credentials have not yet expired.

According to one embodiment the external storage device further comprises:

a consistency checking module for checking the consistency of the file system written onto said external storage device.

This avoids conflicts which may occur during writing processes.

According to one embodiment said consistency checking module is adapted to perform one or more of the following:

checking whether all blocks belonging to a directory are encrypted using the same credential;
checking whether all blocks belonging to certain file are encrypted using the same credential.
This checks for typical conflicts which may occur during writing.

According to one embodiment said consistency checking module is run under one or more of the following conditions:

after detaching the media from a host;
periodically;
after certain write operations onto the file system.

According to one embodiment said consistency checking module keeps a list of blocks containing directory entries.

According to one embodiment the external storage device further comprises: a module for maintaining a data structure containing a mapping between directories and credentials which are used to encrypt the content of the directory, whereas the directory, to which the content is written indicates which credential is to be used for writing

This increases usability, it makes a consistency check easier, as there is no longer only one credential for writing, but predefined credentials which can be used for different subdirectories.

According to one embodiment the external storage device further comprises: a module for hiding the true names of encrypted files and/or directories by changing their names.

This avoids that the importance of files/directories can be guessed from their file names even after the expiration of the credentials.

According to one embodiment there is provided a host for writing data onto an external storage device according to one of the preceding claims, said host comprising:

a writing module for writing one or more access credentials and one or more corresponding expiry conditions into the storage medium.

In this manner there can be implemented a "trusted host" used for defining and writing credentials (and their expiry conditions) onto the medium to thereby prepare or initialise it for being used.

According to one embodiment said host performs a mapping of credentials to one or more of the following:

segments of the storage device,
partitions on the storage device,
physical blocks on the storage device,
files and directories on the storage device.

BRIEF DESCRIPTION OF THE DRAWINGS

Fig. 1 schematically illustrates the operation of external storage medium according to the prior art.

**4**

Fig. 2 schematically illustrates the operation of external storage medium according to a first embodiment of the invention.

Fig. 3 schematically illustrates the operation of external storage medium according to a second embodiment of the invention.

Fig. 4 schematically illustrates the operation of external storage medium according to a third embodiment of the invention.

## DETAILED DESCRIPTION

Before describing embodiments of the invention some terms used in the following description will be explained.

FAT = File Allocation Table
KAT = Key Allocation Table
CAT = Credential Allocation Table
CT = Credential Table
FSD = File System Driver

In the following there will be described an external storage medium and a file system for such an external storage medium as e.g. described in European Patent application no. 06101719.0.

According to one embodiment there is provided an external storage media comprising additional hardware that deals with encryption and decryption key management, as well as a file system that performs encryption and decryption on the fly when the media is accessed, if the required access credentials are provided. The access credentials according to one embodiment are one or more keys which are for example used to encrypt or decrypt the data stored on the external storage device.

Exemplary use cases seen for such an external storage media are to share files among colleagues or business partners and to perform file backups while being on a business trip.

Before there will be described the file system of such an external storage medium at first there will be described an embodiment of the external storage medium itself. The secure external storage medium according to one embodiment contains of all of the components an external storage medium usually is equipped with (such as non-volatile memory and an interface such as e.g. USB). In addition it contains a credential store that can store access credentials (which may comprise one or more keys) which are used to encrypt and decrypt data while being written or read to or from the media. There is a timer on the media that starts to run when the media is unplugged. A power supply is provided to enable the active components of the storage medium to be executed when the medium is disconnected. According to one embodiment the credentials have a lifetime. The timer triggers their deletion upon expiry. In order to store encrypted data on the media or to decrypt stored data to be read, credentials need to be created and stored on the medium.

The external storage medium may be connected to a host for reading and writing data. There are two classes of hosts: one or more trusted hosts and other hosts. A trusted host is a host that belongs to the user/owner of the secure external storage media. It contains special software to manage the credentials on the medium. The "other host" is any kind of host that does not have the special software and that is in no means specifically prepared for exchanging data with the secure external storage media, except of course that for establishing a connection there exists some standard interface like a USB port which, however, is in no way different from a prior art interface.

The user stores data on the secure external storage medium using his trusted host, applies access credentials to the data and defines the expiry conditions of the credentials. According to these conditions, data can be read from or written to the media when it is plugged to another host.

According to one embodiment access credentials have a lifetime. When the user assigns credentials to data stored on the media, he also defines a lifetime of the credentials. When the medium is disconnected from the host, the built-in timer is started. When the medium is attached to another host, before the lifetime has expired and before the credential has been deleted, data stored on the media can be accessed by anyone. After the credential has expired and was deleted by the built-in mechanism of the secure medium, there is no way to access the data anymore. If e.g. a user is sharing files with colleagues or business partners (for example in a meeting) he may be sure that if the medium is lost or forgotten in the meeting room, and later unauthorised users try to access the date, they will be unable to access the data. In such a case, a lifetime of just a few minutes is appropriate. According to one embodiment there are additional credentials available, that enable the user of the media to access the data from his trusted host, even though the access credentials have been deleted.

Other embodiments of a secure external storage medium are described in European Patent application no. 06101719.0 which is incorporated herein by reference.

In the following there will be described embodiments related to concrete implementations and file systems for such secure external storage media.

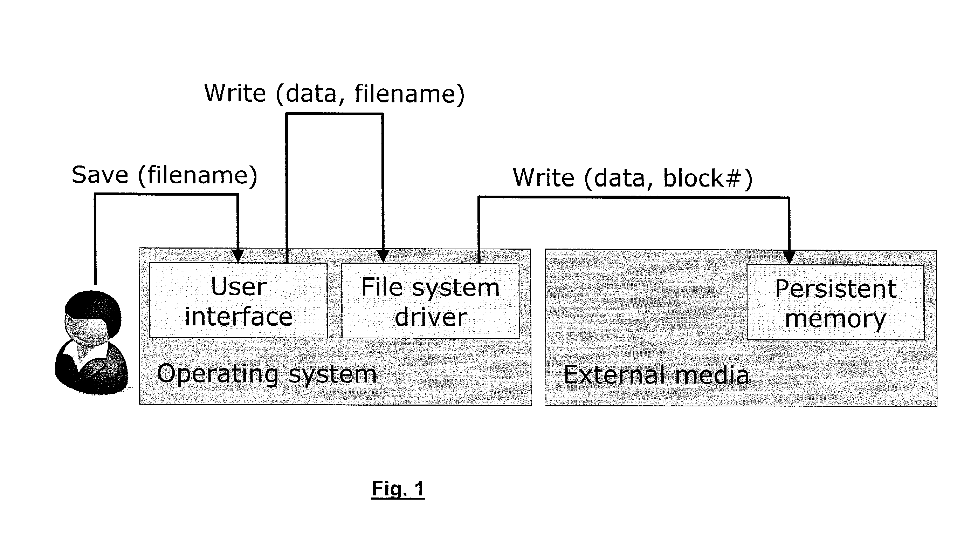

At first, however, it is briefly explained how the reading and writing of data according to the prior art operates in connection with Fig. 1. Fig. 1 shows on the left-hand side the host and on the right-hand side the external medium. In Fig. 1 exemplarily a write operation (triggered by a save(filename) command) is shown. The save command is entered into the user interface and the operating system is responsible for translating it into a command executable by the file system driver which is directly responsible for executing the write operation. This is done by the write operation which writes the data into a certain block,

Ordinary mass storage media get requests from the operating system when attached to the host, to read or write sectors or blocks (= sequence of sectors) from or to the storage. The entire management of the file system and its consistency is up to the operating system and its corresponding file system driver. Consequently, the operating system has to choose the appropriate driver for the file system which has been created on the media when it was formatted.

According to one embodiment the mechanism provided by the present invention does not touch the operating system and its file system drivers. Nevertheless it also has to deal with requests by the operating system to read or write certain sectors or blocks. For that purpose, besides just reading and writing data to the built-in storage according to the operating system's requests, the mechanism according to one embodiment consists of a mass storage media that contains hardware implemented file system drivers, in other words the storage medium itself has implemented thereon a file system driver. Whenever the operating system reads or writes sectors or blocks, the media performs additional tasks on the data, before it is provided to the operating system (in the read case) or before it is written to the storage.

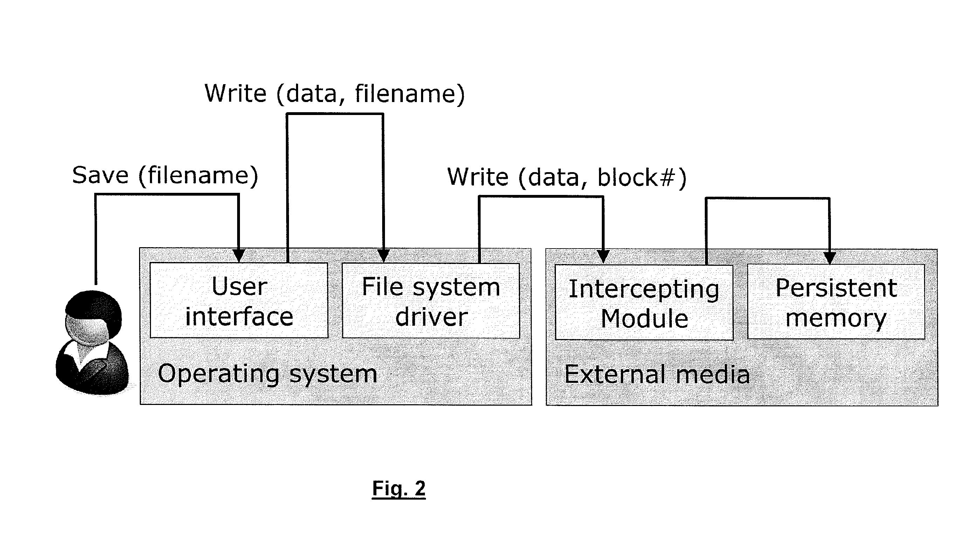

This is schematically illustrated in Fig. 2 which illustrates on the right-hand side an external storage according to one embodiment of the invention. In addition to the conventional elements shown in Fig. 1 there is provided a module called "interceptor" which operates to receive read or write commands from the file system driver of the operating system of the host, performs additional encryption or decryption and thus writes the encrypted data into the persistent memory or forwards the data read from the persistent memory after it as been decrypted to the file system driver.

According to a further embodiment the physical memory of the storage device contains one or more segments. Each of the segments is represented to the host, to which the device is attached, as a separate storage device. In this embodiment ach segment has a credential assigned which is used to encrypt and decrypt the content of the segment. The segments were created while the device was attached to the trusted host. Adding a new segment or resizing existing segment may require a rearrangement of the device and file systems. While the device is attached to the trusted host, the active credentials are chosen. This also selects the active segments, which are the only ones accessible from another host, if the device is attached there. For each segment, there needs to be a mapping from logical blocks to the actual location on the storage media. Selection of which segment is accessed is done by accessing the appropriate device.

A modifying enhancement of this embodiment would be to have the mapping done in the same fashion as a virtual memory manager works with RAM: Only once a logical block is being accessed, a physical block is assigned to it.

According to one embodiment the mechanism comprises a hardware implemented FAT (File Allocation Table) file system, which is capable of encrypting and decrypting blocks stored on the media. According to one embodiment it also includes key management for the encryption/decryption keys.

Such an encrypting file system can be designed for mass storage media, such as a USB-stick, or any other kind of memory card (e.g. Secure Digital card or Compact Flash card).

It is preferable that encryption and decryption shall be transparent to the user and that no additional software ought to be installed on the hosts from which the media will be accessed. These requirements can be fulfilled by an encrypting file system that does not require additional commands in the command set of main stream interfaces to access external storage media, such as USB mass storage devices.. The file system on the external storage device can be accessed by the normal commands of the file system driver of the host, and beyond the communication which is achieved by these commands no further communication with the file system driver of the operating system is necessary. The file system on the external storage medium, however, is independent of the host the medium is attached to. The file system driver implemented on the external storage device may in principle be of any file system driver type, as long as the intercepting module is capable to translate the commands of the conventional file system driver of the host into file system driver commands on the side of the external storage device.

According to one embodiment, however, the file system driver implemented on the external storage device is a FAT (File Allocation Table) file system driver as defined by Microsoft, see e.g., http://www.microsoft.com/whdc/system/ptatform/firmware/fatgen.mspx.

The FAT file system is particularly suited for an embodiment of the present invention because it is supported by all the main stream operating systems. This means that the external storage medium can be read by virtually all hosts on the market because all have a FAT file system driver,

According to one embodiment, when an application writes data to or reads data from the external storage media, equipped with an encrypting file system of the present invention, two components deal with the data: the file system driver of the operating system - which is the ordinary FAT driver - and the intercepting module of the external storage medium, as illustrated in Fig. 2 which illustrates write access.

The intercepting module only 'sees' the commands that are issued by the file system driver. These commands are e.g. of the form: "write data to block 3255", or "read data from block 452". The intercepting module does not get an overview of what the file system driver is doing in order to read or write data and to keep consistency of the file system. The intercepting module therefore performs encryption and decryption of data "on the fly" by dealing with that kind of commands as this is the only information the intercepting module gets.

The intercepting module therefore according to one embodiment has one module which acts towards the file system driver of the host as a file system which can be accessed through ordinary file system driver commands.

The commands received by this module are then further processed in the intercepting module, whereas this further processing comprises the addition of an encryption or decryption functionality depending on whether data is to be written onto or to be read from the external storage device. If data is to be written onto the external storage, the further functionality encrypts these data and then writes it onto the external storage medium using a file system driver implemented on the external storage device. This file system driver according to one embodiment may be a component of the intercepting module, or it may be a separate component.

If data is to be read from the external storage medium by a read command from the host file system driver, the read command is received by the module of the intercepting module which acts as a file system towards the file system driver of the host. The intercepting module then in addition to the mere reading of the data which is performed by the file system driver implemented on the external storage medium, the intercepting module performs a further functionality which in this case includes the decryption of the data which are stored in the external medium in encrypted form. The decrypted data is then forwarded to the file system driver of the host.

In the following there will be described further embodiments of an encrypting file system that operate as described before and that perform encryption and decryption of data stored on the external storage medium. According to one embodiment thereby the file system's consistency is maintained.

According to one embodiment there is only one credential active at a time. It is used for reading and writing. All blocks on the storage media which contain data are encrypted. Different credentials can be used for different files at different times. The file system that is provided to the operating system is a virtual file system which is generated by the interceptor. The term "virtual file system" means that the host interacting with the external storage media appears to be operating on an ordinary mass storage device while it is unaware of all additional operations that take place within the storage device, such as encryption and decryption, mapping of logical addresses to physical addresses, changes to contents of blocks, and other operations as mentioned in the further embodiments. In this embodiment the storage addresses provided by this virtual file system are not "physical" addresses but only "logical addresses" which may be different from physical addresses and which need to be translated into "physical addresses" in order to access a certain storage location on the storage medium. In such an embodiment only those blocks are accessible at a time which are encrypted by the currently active credential and those which are empty. All the others do not appear in the virtual file system to the operating system (because for them there exists no mapping from the physical address into a logical address). The block interceptor performs the mapping between physical and logical blocks, as well as encryption and decryption. To the operating system the storage medium appears different depending on the chosen credential. The active credential is chosen on the trusted host. Multiple credentials can be stored on the storage medium but only one of them can be active.

According to one embodiment the intercepting module comprises a mapping module. This mapping module which is hereinafter also referred to as MAP maps a logical to a physical block number depending on the currently active credential. There can be multiple access credentials, whereas only one of them may be active at a time. However, for each of the access credentials there may be a corresponding mapping table which maps logical to physical addresses for the data encrypted using this access credential. For the different access credentials there may be chosen different expiration conditions like different lifetimes in the host. One of the access credentials is chosen by the trusted host as the "active one":

As the active credential is chosen, the corresponding credential can be seen as a kind of constant for read and write operations. Thus, read and write operations can be carried out successfully even though the operating system dose not (and cannot) provide the credential parameter.

The mapping performed by the mapping module can be expressed as follows:

$$MAP : (lba, cred) \rightarrow pba$$

This means that for a certain access credential cred and a certain logical block address the mapping module provides the corresponding physical block address.

Physical blocks on the storage media are encrypted using an access credential cred. This may be expressed as follows:

$$. \; block : pba \rightarrow enc_{cred}(data)$$

This means that for a certain block on the storage medium the address of which is given by the physical block address pba the data stored on this block is encrypted using the credential cred.

In the following a read operation according to one embodiment will be described.

When the operating system sends a read request for a certain logical block *lba,* the corresponding physical block pba is determined (by referring to the mapping module MAP) and decrypted using the active credential *cred.* Finally, the data stored there is returned to the operating system. This can be expressed as follows:

$$read(lba) : lba \rightarrow dec_{cred}(block(MAP(lba, cred))$$

This means that a read request issued by the file system driver of the operating system and directed to the logical address lba is received by the intercepting module which refers to the mapping module to identify the corresponding physical block, as expressed by block(MAP(lba,cred). The data stored in this block is read and decrypted using the credential cred as expressed by the operation $dec_{cred}()$ applied to the aforementioned data stored at the corresponding physical block.

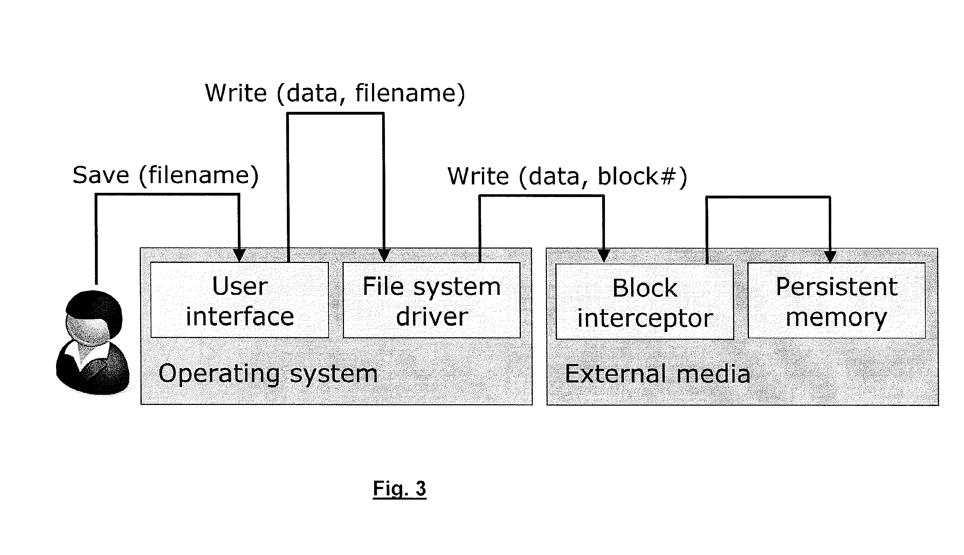

Now a write request according to one embodiment will be described in connection with Fig. 3. Fig. 3 is similar with the embodiment shown in Fig. 2 except that the intercepting module is now a "block interceptor" because in this embodiment the interception is performed on a blockwise basis.

When the operating system sends a write request for a certain logical block *lba* and the data *data* to be written, the data is encrypted using the active credential *cred* and stored in the corresponding physical block, according to the mapping performed by the mapping module *MAP.* This may be expressed as follows:

$$write(lba, data) : block(MAP(lba, cred)) \leftarrow enc_{cred}(data)$$

The command write(lba,data) means that data is to be written onto the logical block address, and this command is sent by the file system driver of the operating system of the host towards the external storage. It is then received by the intercepting module which acts towards the host as a "file system" by providing towards the host a "virtual file system" which provides a file system based on "logical addresses" rather than on "physical addresses". The write command received by the virtual file system is then processed by the intercepting module to enhance it by the encryption functionality. For that purpose the intercepting module uses the mapping module MAP which performs a lookup operation MAP(lba, cred) to identify the physical block address which corresponds to the logical block address lba and the active credential cred. Then the data is encrypted using the active credential cred as indicated by $enc_{cred}(data)$ and then the encrypted data is stored onto the block.

With the solution of this embodiment the storage medium is "segmented" into "virtual areas", one for each access credential, with the mapping module MAP pointing to the storage area associated to a certain credential. Only the storage area which corresponds to the presently active credential is readable for the "other host". The trusted host can access all areas and can choose and set the active credential.

In the following a further embodiment will be described. This embodiment enables multiple credentials to be active at the same time. In order to enable the external medium to understand when to use which credential, the external medium provides several partitions. For each partition an active credential is assigned. The user chooses the credential by which he wants to encrypt files on the external media by operating on the corresponding partition. As the credential to be used for a particular partition depends on the logical block number, the external storage media is able to distinguish read and write accesses to the partitions and is therefore able to use the appropriate credential.

The basic concept behind this solution is the same as in the previous embodiment. The difference is that there are multiple storage media of the type of the previous embodiment at the same time unified in one physical device on one physical file system. The intercepting module maintains a partition table that defines which logical block number belongs to which partition. The formal specification of the data structures is the same as the formal specification of the previous embodyment, as the MAP is able to derive the credential to be used from the logical block number and the partition table. Each partition, offered to the operating system, behaves as a storage medium of the type as described in connection with the previous embodiments.

In the following there will be described a further embodiment which provides multiple read credentials and one active write credential. There is provided a credential table in which all credentials are stored. All the credentials that are stored in the credential table are used as read credential. One of them is marked as active write credential. All data that was once encrypted with a credential that is currently stored in the credential table, can be read. Unlike in the previous embodiments the storage medium does not provide a virtual file system to the operating system. Instead the operating system always sees the entire physical file system. However, still the read and write commands originating by the file system driver of the host are intercepted by an intercepting module. The addresses, however, do not need to be translated because there is no difference between "logical" and "physical" addresses. The intercepting module may, however, be considered to still provide a "virtual file system" in the sense that what the host "sees" seems to be a file system, however, in fact it is the "virtual file system" provided by the intercepting module which receives the commands form the host, the commands then being further processed by the intercepting module to provide encryption/decryption, the "real" reading or writing then being performed by the file system driver of the storage medium.

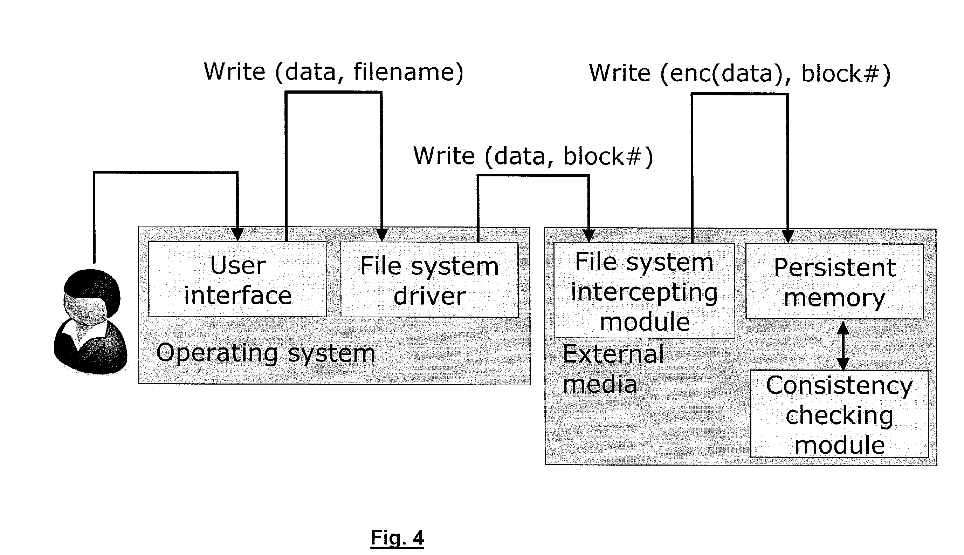

Since there is no difference between logical and physical addresses in this embodiment, the file system driver of the host "sees" the whole storage of the external medium, however it cannot access those files and directories that are encrypted with a credential that is not present in the credential storage, as data cannot be decrypted in this case. As illustrated in Fig. 4, the intercepting module in this embodiment is a "file system interceptor" which accesses the data structures of this embodiment to determine which credentials are to be used to perform decryption.

In this embodiment each block's data is encrypted with a block key, which is generated individually for each block, whenever new data is written to a block. The block key is stored in a key allocation table, encrypted by the write credential,

There is further provided a credential allocation table which stores which credential is used for which block key and further a credential table which contains the credentials.

According to one embodiment the file system of the external storage medium (and of the host) is a FAT file system, the file system of the external storage medium being enhanced by encryption/decryption functionality. Such an encrypting file system according to one embodiment consists of the following elements and data structures.

*FAT:* the file allocation table as specified in the FAT16/32 specification. It is a uni-dimensional array that has as many fields as there are blocks (= sequences of sectors) on the file system. The position of a field in the array represents the corresponding number of the block in the file system. The value of a field stores the number of the block that is the next one that belongs to a file or directory on the file system if a file/directory exceeds the size of a block. In the present embodiment there are no changes or extensions to the conventional FAT data structure of the FAT file system. Its structure and operation may be expressed by *FAT: block# → subsequent_block#*

*KAT:* The key allocation table stores the decryption/encryption key used to decrypt/encrypt the content of a block. The key is stored in the corresponding field of the KAT. Each block has its own block encryption/decryption key *(block key).* Like the FAT, the KAT is an array where the position in the array is the number of the corresponding block. The value in the field is the block key, stored in an encrypted format in the KAT. Credentials are used to decrypt and encrypt block keys. The structure and operation of the KAT may be expressed by $KAT: block\# \rightarrow enc_{CT(CAT(block\#))}$ *(blockkey(block#))*

This means that for a certain block number block# there exists a corresponding block key blockkey(block#). As will be explained in somewhat more detail later, this block key is encrypted (operation enc) by a credential which can be identified by referring to the credential allocation table CAT through the operation CAT(block#) which by looking up the CAT using the block number returns the corresponding credential (or its corresponding identifier). Using the thus found credential (either found directly of by referring to the credential table CT using the found identifier) the block key that corresponds to the block block# can be encrypted or decrypted.

*CAT:* As already briefly mentioned above the credential allocation table stores the *credential* used to decrypt/encrypt the block key which is used to decrypt/encrypt the content of a block. Like the KAT, the CAT is an array, where the position in the array is the number of the corresponding block. According to one embodiment the value of the field is the credential itself or an identifier of the credential which is used to decrypt/encrypt the block key for the corresponding block. The credential is stored in the CT. The structure and operation of the CAT may be expressed by *CAT : block# → cred#*

This means that for each block the CAT stores a corresponding credential or its identifier by which the credential then can be found by referring to the credential table.

*CT*: each credential table entry contains a credential, its corresponding unique identifier and its expiry conditions. The structure and operation of the CT may be expressed by *CT : cred# → cred, expirycondition*

This means that for each identifier cred# there is stored the corresponding credential and its expiry condition (e.g. its lifetime).

*Credential:* the credential is created by the user, it is used to decrypt and encrypt block keys stored in the KAT. According to one embodiment it is a symmetric cryptographic decryption/encryption key, stored in the CT.

*Block key:* the block key is created by the encrypting file system, it is used to decrypt and encrypt the content of a block. It is a symmetric cryptographic decryption/encryption key, which is created whenever new data is written to a block.

The block key is stored in the KAT.

FSD: the sequence of a predefined number of sectors bound to a logical block that is the smallest amount of data that is read from or written to the file system in a read or write operation. It can be accessed by a read or a write operation through the file system driver FSD implemented on the external storage medium, either as part of the file system intercepting module or as a separate part. The block contains the file or directory data and can be accessed by the FSD. The function and operation of a block in connection with a FSD may be expressed as follows:

$$FSD : block\# \rightarrow enc_{blockkey(block\#)}(blockcontecnt)$$

This means that at a block with the block number block# which can be accessed by the FSD using a read or write command there is written or read data blockcontent which is encrypted (or decrypted) by the block key corresponding to the block number. This operation shows exemplarily the difference of the present embodiment versus the prior art where the operation of the FSD (which was performed by the host FSD) could be expressed by *FSD : block# → (blockcontecnt)* which means that a FSD command directly addressed the blockcontent. In the present embodiment, however, the operation is not performed any more by the FSD of the host but by the file interception module of the external storage medium (or its FSD) and the operation is enhanced by the encryption functionality $enc_{blockkey(block\#)}()$, whereas for the key management the further tables like KAT, CAT, and CT as mentioned before are used.

In the following a read request according to this embodiment will be described in somewhat more detail.

The host sends a read request for a certain block to the medium. The medium returns the decrypted content of the block, if the required credential is available. To decrypt the data it gets the credential index from the CAT, looks up the corresponding credential in the CT and decrypts the block key from the KAT using the credential that has been found as corresponding to the credential index. Then it uses the block key to decrypt the block content and returns the block content. This operation may be expressed as follows:

$$read(block\#) : block\# \rightarrow dec_{dec_{CTcred(CAT(block\#))}(KAT(block\#))}(FSD(block\#))$$

This means that the intercepting module receives the read(block) command from the host, it then accesses the block corresponding to this command using the FSD of the external storage medium by FSD(block#), from KAT(block#) it gets the block key with which the data was encrypted and from CAT(block#) it gets the credential ID of the credential with which the block key was encrypted. Using CT it can lookup the credential, decrypt the block key and then decrypt the data stored in the block.

In the following a write request according to this embodiment will be described in somewhat more detail.

When the host sends a write request, including the block number that is to be written and the content, a new block key is created on the media to be used for encryption of that block (operation i) below). The content is encrypted by the block key and stored (operation ii) below). The block key is stored in the KAT, encrypted by the credential wcred used for writing (operation iii) below). The index of the credential used for this block is stored in the CAT (operation iv) below). *write(block#, blockcontent)* :

    i) Generate new block key *blockkey*
    ii) *FSD(block#)* ← $enc_{blockkey}(blockcontent)$
    iii) *KAT(block#)* ← $enc_{CTcred(wcred\#)}(blockkey)$
    iv) *CAT (block#)* ← *wcred#*

According to one embodiment, if the block onto which data is to be written contains already a directory then the CAT is referred to in order to lookup the write credential of this block and this is used for the writing procedure. In this manner it can be avoided that the directory block is "re-encrypted" with another credential when a directory entry in the directory block is updated. This makes sense as a directory content should not be re-encrypted, each time a file has been added to the directory. Otherwise it might happen that a directory contains several files, each one encrypted using another credential. To avoid this the directory could always be re-encrypted with the write credential of the most recently written file. This would, however, have the effect that the directory encryption would change all the time, and such an effect can be avoided by looking up the write credential in the CAT as described before.

If the block does not contain a directory, the current write credential is used for writing data.

According to one embodiment the external storage comprises a consistency checking module which performs a consistency check. There are different forms of consistency checks which may be executed by this module.

According to one embodiment for all directory entries on the file system the consistency checking module finds the starting block and follows the subsequent blocks stated in the FAT to the end of directory. It then compares in the CAT that all these blocks have the same credential applied for encryption. If some blocks differ, the consistency checking module uses the credential that is used for the first block for all the others for encryption. This may involve the re-encryption of some block keys. This is necessary to make sure that directory blocks that have been appended to existing ones (i.e. they both represent the same directory) are encrypted with the same credential as the existing ones.

A further check performed by the consistency checking module may involve a check whether there are files which have blocks which are encrypted with different write credentials. For those files the consistency checking module may use the current write credential re-encrypting such files.

According to one embodiment a consistency check is run on unplugging the media. Another possibility, either alternatively or additionally, consists in running a consistency check in the background while the device is connected to the host. A consistency check may be run periodically, or it may be triggered by certain events, e.g. every time a directory block is written or a file is updated.

According to one embodiment there is maintained a data structure containing a mapping between directories and credentials, which are used to encrypt the content of the directory. This increases usability, it makes a consistency check easier, as there is no longer only one credential for writing, but predefined credentials which can be used for different subdirectories. The directory, to which the content is written indicates which credential is to be used for writing.

According to one embodiment there may be performed a block key caching. On block key creation, there may be cached the block key encrypted with all the credentials currently available in CT. Furthermore directory block locations may be cached. For that purpose there is maintained a cache of the blocks which contain directory entries which may be created on medium attachment. The caching may increase the performance.

According to a further embodiment the true names of encrypted files/directories may be hidden. For that purpose, on returning a directory block on a read operation, the file names of encrypted files and directories may be changed to other names, e.g.random names, before returning the block content to the operating system.

A problem related to this embodiment is that if there are directories, some files might be encrypted, others not. And for some of the encrypted files, the credential might have been expired. If the external storage now shows the directory content, a user might be able to guess about the file content and its importance due to the user being able to read the file name. To avoid that, these file names can be randomized for those files whose credentials have been expired. One possibility could be to just not show these files in the directory, but then there is no way to prevent the OS from overwriting them, as the OS FSD has to assume that the blocks where these files are stored are empty. To avoid this the file names may be randomized.

According to one embodiment the randomization is not written to the file system's directory entry but it is done by the interceptor on the fly when the OS sends a read request. With this modification the file system does not change.

Further modifications can be imagined by the skilled person. For example a storage medium as described hereinbefore may not only be implemented using a FAT file system but also other file systems.

Furthermore, the skilled person will regularly recognize that the components and modules described in connection with the embodiments of the invention herein before may be implemented either in software or in hardware or by a combination of both of them.

The skilled person will further recognise that the external storage medium in accordance with embodiments of the invention may instead of being connected to a computer be connected to any other device or host capable of writing user data thereon or reading user data therefrom, such devices being e.g. mobile phones, smartphones, PDAs, or any other computing devices. Furthermore, the external storage medium may be any medium which can be connected to such a host, not only a USB stick, a SD card, a CF memory, but also e.g. a hard disk or any detachable storage medium.

**Claims**

1. An external storage device which is capable to be connected to a host to enable said host to write data thereon or to read data therefrom, said storage device comprising:

a memory module onto which data can be written and from which data can be read; and

an intercepting module, said intercepting module being adapted to receive a read or a write command from said host, said intercepting module being further adapted to perform encryption or decryption on the data to be read from said memory or to be written to said memory based on one or more credentials stored on said external storage device, and further being adapted to perform reading data from or writing data to said memory by forwarding a read or write command to said memory module of said external storage device to thereby read or write data which has been encrypted or decrypted using said one or more keys stored on said storage device.

2. The external storage device of claim 1, further comprising:

a credential mapping table for respectively mapping one or more credentials to corresponding segments of said memory module to thereby define the one or more credentials by which the data in a certain segment is encrypted or decrypted, whereas the segment corresponding to an active credential appears towards said host as said external storage medium and the other segments being invisible.

3. The external storage device of claim 1 or 2, further comprising:

a virtual file system module for providing a virtual file system towards said host, said file system module being provided for receiving read or write commands from said host;

a mapping module for mapping a logical address received in connection with a read or write command by said virtual file system to a corresponding physical block address;

a credential store for storing at least one access credential used for encrypting and/or decrypting data to be stored onto or written from said external storage device, and

a module for generating a read or write command to an address in said memory based on the mapping performed by said mapping module.

4. The external storage device of claim 1,2 or 3, further comprising:

a virtual file system which appears towards said host as a file system implemented on said external storage medium and which presents to said host those data as readable and/or writable for which there are access credentials which have not yet expired.

5. The external storage device of one of claims 1 to 4, wherein

for reading and writing there is one credential being active among one or more credentials;

said mapping module stores a mapping between a logical address and a corresponding physical address depending on the access credential.

6. The external storage device of one of claims 1 to 5, wherein

for reading and writing there is one or more credential being active among one or more credentials;

said mapping module stores a mapping between a logical address and a corresponding physical address and access credential depending on the selected segment.

7. The external storage device of one of the preceding claims, wherein
said external medium has several partitions, whereas for each partition an active credential is assigned and the user chooses the credential by which he wants to encrypt or decrypt files on the external media by operating on the corresponding partition.

8. The external storage device of one of the preceding claims, wherein

a data block is encrypted by a block key, and said block key being encrypted by a corresponding credential.

9. The external storage device of claim 8, further comprising:

a key allocation table for maintaining a correspondence between a block and its corresponding block key with which the block is encrypted;

a credential allocation table for maintaining a correspondence between a block and its corresponding credential or credentials with which the corresponding block key is encrypted.

10. The external storage device of one of the preceding claims, further comprising:

a consistency checking module for checking the consistency of the file system written onto said external storage device.

11. The external storage device of claim 10, wherein said consistency checking module is adapted to perform one or more of the following:

checking whether all blocks belonging to a directory are encrypted using the same key;
checking whether all blocks belonging to certain file are encrypted using the same credential.

12. The external storage device of claims 9 to 11, wherein said consistency checking module is run under one or more of the following conditions:

after detaching the media from a host;
periodically;
after certain write operations onto the file system.

13. The external storage device of one of claims 9 to 12, wherein said consistency checking module keeps a list of blocks containing directory entries.

14. The external storage device of one of the preceding claims, further comprising:

a module for maintaining a data structure containing a mapping between directories and credentials which are used to encrypt the content of the directory, whereas the directory, to which the content is written indicates which credential is to be used for writing.

15. The external storage device of one of the preceding claims, further comprising:

a module for hiding the true names of encrypted files and/or directories by changing their names.

16. A host for writing data onto an external storage device according to one of the preceding claims, said host comprising:

a writing module for writing one or more access credentials and one or more corresponding expiry conditions into the storage medium.

17. The host of claim 16, wherein said host performs a mapping of credentials to one or more of the following:

segments of the storage device,
partitions on the storage device,
physical blocks on the storage device,
files and directories on the storage device.


**Amended claims in accordance with Rule 137(2) EPC.**

1. An external storage device which is capable to be connected to a host to enable said host to write data thereon or to read data therefrom, said storage device comprising:

a memory module onto which data can be written and from which data can be read; and
an intercepting module, said intercepting module being adapted to receive a read or a write command from said host, said intercepting module being further adapted to perform encryption or decryption on the data to be read from said memory or to be written to said memory based on one or more credentials stored on said external storage device, and further being adapted to perform reading data from or writing data to said memory by forwarding a read or write command to said memory module of said external storage device to thereby read or write data which has been encrypted or decrypted using said one or more credentials stored on said storage device, **characterized in that**
said credentials have been written with one or more corresponding expiry conditions into the storage medium which presents to said host those data as readable and/or writable for which there are access credentials which have not yet expired.

2. The external storage device of claim 1, further comprising:

a credential mapping table for respectively mapping one or more credentials to corresponding segments of said memory module to thereby define the one or more credentials by which the data in a certain segment is encrypted or decrypted, wherein the segment corresponding to an active credential appears towards said host as said external storage medium and the other segments being invisible.

3. The external storage device of claim 1 or 2, further comprising:

a virtual file system module for providing a virtual file system towards said host, said file system module being provided for receiving read or write commands from said host;
a mapping module for mapping a logical address received in connection with a read or write command by said virtual file system to a corresponding physical block address;
a credential store for storing at least one access credential used for encrypting and/or decrypting data to be stored onto or written from said external storage device, and
a module for generating a read or write command to an address in said memory based on the mapping performed by said mapping module.

4. The external storage device of one of claims 1 to 34, wherein
for reading and writing there is one credential being active among one or more credentials;
said mapping module stores a mapping between a logical address and a corresponding physical address depending on the access credential.

5. The external storage device of one of claims 1 to 4, wherein
for reading and writing there is one or more credential being active among one or more credentials;
said mapping module stores a mapping between a logical address and a corresponding physical address and access credential depending on the selected segment.

6. The external storage device of one of the preceding claims, wherein
said external medium has several partitions, wherein for each partition an active credential is assigned and the user chooses the credential by which he wants to encrypt or decrypt files on the external media by operating on the corresponding partition.

7. The external storage device of one of the preceding claims, wherein
a data block is encrypted by a block key, and said block key being encrypted by a corresponding credential.

8. The external storage device of claim 7, further comprising:

a key allocation table for maintaining a correspondence between a block and its corresponding block key with which the block is encrypted;
a credential allocation table for maintaining a correspondence between a block and its corresponding credential or credentials with which the corresponding block key is encrypted.

9. The external storage device of one of the preceding claims, further comprising:

a consistency checking module for checking the consistency of the file system written onto said external storage device.

10. The external storage device of claim 9, wherein said consistency checking module is adapted to perform one or more of the following:

checking whether all blocks belonging to a directory are encrypted using the same key;
checking whether all blocks belonging to certain file are encrypted using the same credential.

**11.** The external storage device of claims 8 to 10, wherein said consistency checking module is run under one or more of the following conditions:

after detaching the media from a host;
periodically;
after certain write operations onto the file system.

**12.** The external storage device of one of claims 8 to 11, wherein said consistency checking module keeps a list of blocks containing directory entries.

**13.** The external storage device of one of the preceding claims, further comprising:

a module for maintaining a data structure containing a mapping between directories and credentials which are used to encrypt the content of the directory, wherein the directory, to which the content is written indicates which credential is to be used for writing.

**14.** The external storage device of one of the preceding claims, further comprising:

a module for hiding the true names of encrypted files and/or directories by changing their names.

**15.** A host for writing data onto an external storage device according to one of the preceding claims, said host comprising:

a writing module for writing one or more access credentials and one or more corresponding expiry conditions into the storage medium.

**16.** The host of claim 15, wherein said host performs a mapping of credentials to one or more of the following:

segments of the storage device,
partitions on the storage device,
physical blocks on the storage device,
files and directories on the storage device.

Write (data, filename)

Save (filename)

Write (data, block#)

User interface

File system driver

Operating system

Persistent memory

External media

Fig. 1

Write (data, filename)

Save (filename)                    Write (data, block#)

User | File system | Intercepting | Persistent
interface | driver | Module | memory

Operating system                   External media

Fig. 2

Write (data, filename)

Save (filename)                    Write (data, block#)

| User interface | File system driver | | Block interceptor | Persistent memory |

Operating system                   External media

Fig. 3

EP 1 998 270 A1

Write (data, filename)   Write (enc(data), block#)

Write (data, block#)

| User interface | File system driver | | File system intercepting module | Persistent memory |

Operating system

External media

Consistency checking module

Fig. 4

EP 1 998 270 A1

**European Patent Office**

**EUROPEAN SEARCH REPORT**

**Application Number**

EP 07 10 9378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/262361 A1 (THIBADEAU ROBERT H [US]) 24 November 2005 (2005-11-24) * abstract * * paragraphs [0021], [0024], [0034] - [0036], [0040], [0048], [0074], [0081], [0085] - [0087], [0090]; figure 8 * | 1,7-10, 12,16,17 | INV. G06F21/24 G06F21/02 G06F21/00 |
| Y | * the whole document * | 2-6 | |
| Y | US 2004/088513 A1 (BIESSENER DAVID W [US] ET AL) 6 May 2004 (2004-05-06) * paragraphs [0017], [0050], [0051], [0052], [0098] * | 2,4 | |
| Y | US 2006/218412 A1 (HARS LASZLO [US] ET AL) 28 September 2006 (2006-09-28) * paragraphs [0005], [0016], [0022], [0023], [0025] - [0027], [0029], [0033]; figure 6; table 1 * | 3-6 | |
| A | WO 03/010643 A (ANTIQUE BOOKS INC [US]; THIBADEAU ROBERT H [US]) 6 February 2003 (2003-02-06) * the whole document * | 1-17 | TECHNICAL FIELDS SEARCHED (IPC) G06F |
| A | WO 2006/069194 A (SANDISK CORP [US]; DISCRETIX TECHNOLOGIES LTD [IL]; JOGAND-COULUMB FAB) 29 June 2006 (2006-06-29) * the whole document * | 1-17 | |

The present search report has been drawn up for all claims

| Place of search | Date of completion of the search | Examiner |
|---|---|---|
| Munich | 17 December 2007 | Savvides, George |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 998 270 A1**

**REFERENCES CITED IN THE DESCRIPTION**

**Patent documents cited in the description**

- EP 06101719 A